# FASCICULE DE BREVET EUROPEEN

(11) **EP 0 791 185 B1**
(45) Date de publication et mention de la délivrance du brevet: **24.11.2004**
(21) Numéro de dépôt: 96930203.3
(22) Date de dépôt: 04.09.1996
(51) Int. Cl.: G02F 1/13357, H04N 9/31

(54) **SYSTEME D'ILLUMINATION D'UN ECRAN DE VISUALISATION COULEURS ELECTROOPTIQUE**
BELEUCHTUNGSSYSTEM EINES ELEKTROOPTISCHEN FARBIGEN BILDSCHIRMS
SYSTEM FOR LIGHTING AN ELECTROOPTICAL COLOR DISPLAY SCREEN

(30) Priorité: 12.09.1995 FR 9510657
(43) Date de publication de la demande: 27.08.1997
(73) Titulaire: THOMSON CSF, 75008 Paris (FR)
(72) Inventeur: JOUBERT, Cécile, F-92402 Courbevoie Cédex (FR); LOISEAUX, Brigitte, F-92402 Courbevoie Cédex (FR); HUIGNARD, Jean-Pierrre, F-92402 Courbevoie Cédex (FR); DELBOULBE, Anne, F-92402 Courbevoie Cédex (FR)
(86) Numéro de dépôt international: PCT/FR1996/001348
(87) Numéro de publication internationale: WO 1997/010528

(56) Documents cités:
- EP-A- 0 633 702
- EP-A- 0 692 730
- FR-A- 2 699 688

## Description

L'invention concerne un système d'illumination d'un écran de visualisation couleurs électrooptiques et notamment un projecteur trichrome à cristal liquide. Ce système a pour but d'améliorer les performances colorimétriques d'un projecteur à cristal liquide.

Dans un projecteur trichrome on a intérêt à obtenir des gammes trichromatiques les plus saturées possibles pour augmenter les nuances restituées de l'image et s'approcher le plus possible du contenu colorimétrique de la prise de vue. Il convient donc d'abord de choisir judicieusement les sources d'éclairage.

Cependant, l'une des principales limitations des dispositifs de projection à cristaux liquides est apportée par le dispositif d'illumination. Cette limitation provient en partie du choix réduit de sources blanches compatibles avec cette application. En effet, les sources blanches doivent à la fois satisfaire à des critères d'efficacité lumineuse élevée, de stabilité de leur colorimétrie, de durée de vie élevée, ainsi qu'à des impératifs de coût. il apparaît aujourd'hui que les lampes à arc de type halogénure métallique constituent le meilleur compromis à ces critères.

Ces lampes à arc plus particulièrement développées pour la projection cinéma présentent une colorimétrie convenable pour cette application puisque ses coordonnées chromatiques x/y sont très proches de celles du "blanc" de référence standard télévision.

Pour être utilisée dans un projecteur à cristal liquide, la lumière émise par ces lampes à arc doit subir une séparation chromatique de façon à obtenir différents faisceaux de gammes de longueurs d'ondes différentes.

De façon connue, on extrait du faisceau émis par la lampe, trois faisceaux dans le vert, le bleu et le rouge. '

Cette séparation chromatique peut se faire avec des miroirs dichroïques comme cela est décrit dans le brevet français n°92 15382 de façon à obtenir des faisceaux monochromatiques distincts éclairant chacun un écran à cristal liquide. La lumière émise par les différents écrans est ensuite mélangée de façon à superposer les images produites par ces écrans.

La séparation chromatique peut être réalisée également à l'aide d'un système de séparation spatio-chromatique qui sépare les différentes gammes de longueurs d'ondes selon des directions différentes angulairement. On dispose alors d'un seul écran à cristal liquide dont chaque élément image (dot) possède autant d'éléments d'affichage élémentaire (pixels) qu'il y a de gammes de longueurs d'ondes. Typiquement, un dot possède donc un élément image pour le rouge, un pour le bleu et un pour le vert. La demande de brevet français n° 93 08470 décrit un exemple de réalisation d'un tel système.

Cependant, la reconstitution d'une image couleur, à l'aide d'éléments images émettant chacun une couleur primaire, nécessite que chaque primaire soit convenablement saturée c'est-à-dire que les longueurs d'ondes qu'elle contient constituent une couleur primaire proche du standard TV. De plus, il faut que le niveau énergétique de chaque primaire soit adapté. C'est ce que l'on appelle la balance colorimétrique. La demande de brevet français n° 92 15382 décrit un dispositif dans lequel on prévoit un filtre permettant d'éliminer complètement ou quasi complètement (dans des proportions atteignant ou dépassant 84 %) certaines longueurs d'ondes indésirables ayant un effet polluant au sens colorimétrique sur la saturation d'une primaire. Par exemple, il s'agit d'éliminer avec certaines lampes une longueur d'onde très intense proche de 570 nm et correspondant au jaune. Ce dispositif permet ainsi d'éliminer des longueurs d'ondes préjudiciables à la pureté des longueurs d'ondes primaires et concourt donc à obtenir une bonne saturation de ces primaires.

Cependant, on s'aperçoit que l'élimination de certaines longueurs d'ondes diminue le niveau énergétique de la bande primaire auquel elles appartiennent. De même, on constate que le niveau énergétique de certains primaires devrait être réduit par rapport au niveau énergétique des autres primaires (balance colorimétrique) sans pour autant éliminer des longueurs d'ondes. Par exemple, dans le faisceau émis par certaines lampes on peut avoir intérêt à réduire l'intensité lumineuse de la longueur d'onde du jaune pour diminuer l'intensité globale de la primaire verte.

L'invention telle qu'exposée dans les revendications fournit une solution à un tel problème.

Les différents objets et caractéristiques de l'invention apparaîtront plus clairement dans la description qui va suivre et dans les figures annexées qui représentent :
- la figure 1, un schéma général d'un dispositif d'affichage couleurs ne comportant qu'un seul écran à cristal liquide et un dispositif de séparation spatio-chromatique ;
- les figures 2a et 2b, un exemple de réalisation du dispositif de la figure 1 ;
- la figure 3a, un exemple d'application du système de l'invention au dispositif de la figure 1 ;
- la figure 3b, un dispositif comportant un système de modulation chromatique.
- la figure 4, un exemple de réalisation détaillé selon l'invention avec deux modulateurs chromatiques selon l'invention.

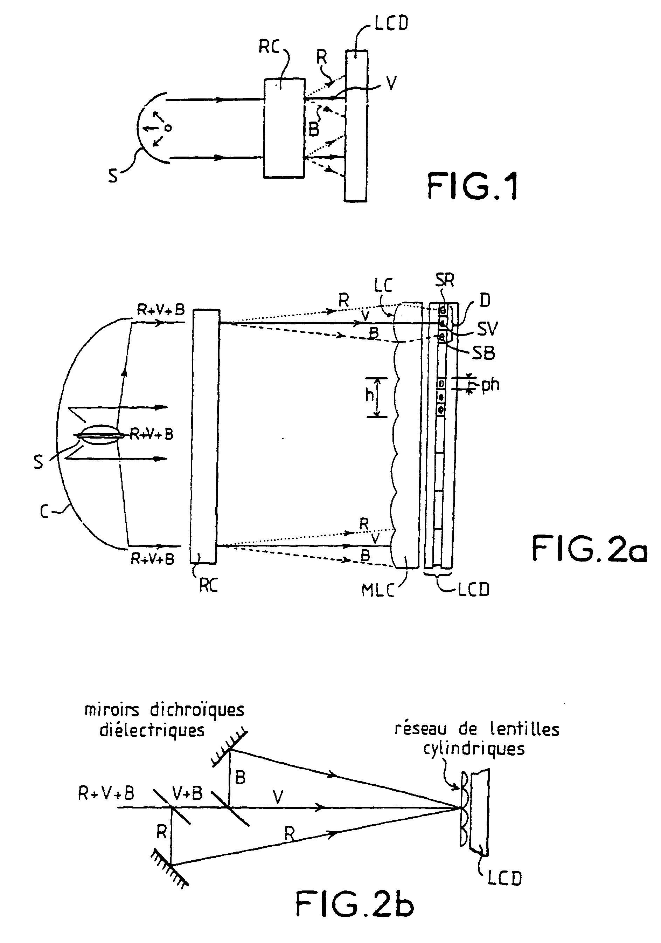

Un système d'affichage couleurs prévoyant une séparation angulaire des couleurs comporte comme cela est représenté en figure 1 :
- une source S émettant un faisceau multichrome et de préférence un faisceau dont la composition des différentes longueurs d'ondes fournit une couleur blanche ;
- un séparateur chromatique RC reçoit le faisceau émis par la source et sépare différentes gammes de longueurs d'ondes correspondant chacune à une gamme de couleurs de façon à transmettre plusieurs faisceaux selon des directions différentes. Par exemple, il transmet trois faisceaux chromatiques R, V et B correspondant respectivement au rouge, au vert et au bleu ;
- un écran à cristal liquide LCD reçoit les différents faisceaux chromatiques. Certains éléments images de l'écran sont éclairés par le faisceau R, d'autres, par le faisceau V et d'autres enfin par le faisceau B.

La figure 2a représente un exemple de réalisation du système de la figure 1. Ce système comporte :
- une source blanche d'éclairage S comportant un système optique C de l'art connu pour collimater la lumière émise par la lampe ;
- un élément séparateur chromatique RC qui permet de séparer angulairement les trois primaires rouge, vert, bleu (R, V, B) de la source S suivant trois directions choisies. Ce séparateur est enregistré optiquement dans un matériau photosensible et est constitué alors de microstructures de phase (variations d'indices ou reliefs) ;
- un réseau de micro-lentilles cylindriques MLC disposé en avant de l'écran LCD (éventuellement directement sur la contre-lame du LCD) ;
- un écran à cristaux liquides (LCD) dépourvu de filtres colorés qui module spatialement la source d'éclairage en fonction des signaux vidéo trichrome R, V, B.

Le principe de fonctionnement du dispositif peut être décrit comme suit : la fonction du séparateur RC permet de séparer angulairement les trois composantes spectrales de la source d'éclairage collimatée. Ces trois bandes spectrales sont ensuite focalisées suivant trois lignes colorées parallèles dans le plan focal de chaque lentille cylindrique. Selon l'exemple de réalisation de la figure 2a, le faisceau V de couleur verte est normal au plan focal des lentilles MLC et les faisceaux R et B (rouge et bleu) sont symétriques par rapport à cette normale et font un angle d'incidence θi. Par conséquent, en adaptant d'une part l'angle d'indice θi de chaque composante spectrale sur les micro-lentilles cylindriques et d'autre part la focale f de ces micro-lentilles on peut réaliser simultanément :
- la focalisation successive de chaque couleur dans le plan du cristal liquide et centrée sur chaque sous-pixel adressé par la même couleur. Les caractéristiques θi, f du dispositif dépendent de la taille de l'écran LCD, du nombre de pixels et de la répartition des sous-pixels dans un dot.

Le séparateur chromatique RC peut être réalisé selon d'autres principes tels que la dispersion chromatique obtenue avec un prisme. Le séparateur RC est alors un prisme. On peut également utiliser une association de miroirs dichroïques tels que représentés en figure 2b.

Cependant, comme cela a été expliqué précédemment, l'invention prévoit de réaliser la balance colorimétrique tant en compositions des longueurs d'ondes qu'en intensités lumineuses des différentes gammes de couleurs. Pour cela, l'invention prévoit de moduler l'intensité lumineuse de certaines longueurs d'ondes. Un ou plusieurs filtres convenablement enregistrés réfléchissent ou absorbent la totalité ou une partie prédéterminée de la lumière dans certaines longueurs d'ondes.

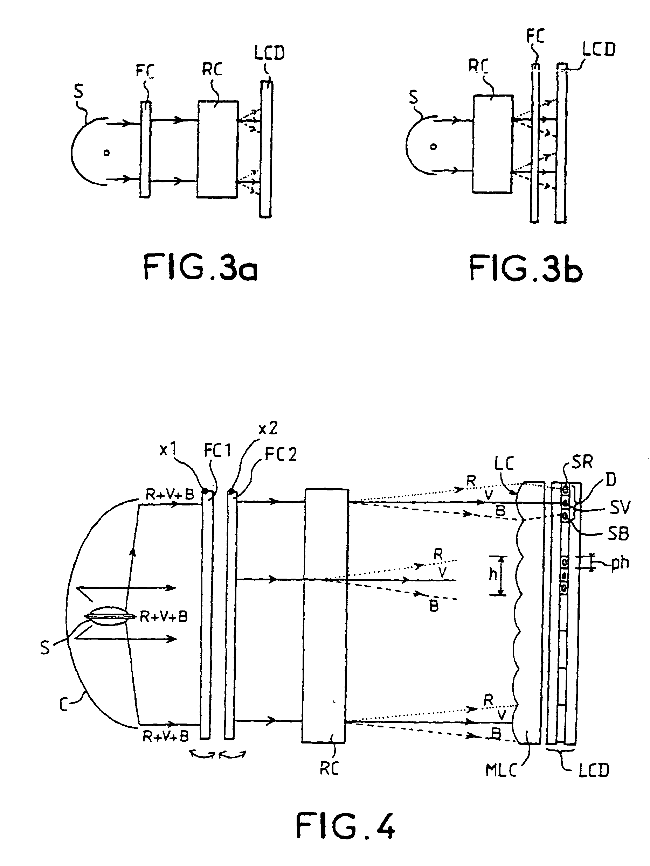

Selon la figure 3, un filtre ou modulateur chromatique FC réalisant cette fonction est placé entre la source S et le séparateur spatio-chromatique RC.

Selon la figure 3b, le modulateur chromatique FC est placé entre te séparateur spatio-chromatique et l'écran LCD.

La figure 4 représente un exemple de réalisation détaillé du système de l'invention. Ce système reprend les éléments du système de la figure 2a. Il comporte en outre un ou des modulateurs chromatiques FC1, FC2. Chaque modulateur est conçu pour être transparent à toutes longueurs d'ondes excepté à une longueur d'onde ou une gamme restreinte de longueurs d'ondes autour d'une longueur d'onde centrale dont il ne permet la transmission que d'une partie déterminée de l'énergie.

Chaque modulateur chromatique FC1, FC2 est mobile en rotation autour d'un axe x1, x2 qui est perpendiculaire à la direction de propagation de la lumière qu'il module. Cela permet ainsi de déplacer la longueur d'onde centrale de la gamme modulée.

Un modulateur chromatique FC1, FC2 peut être réalisé dans des matériaux tels que de la gélatine bichromatée ou des photopolymères.

Le dispositif de projection de l'invention permet donc par l'utilisation de composants holographiques pour les modulateurs FC1, FC2, d'ajuster simplement les coordonnées chromatiques des trois primaires R, V, B et leurs intensités respectives dans un projecteur à cristal liquide.

Il est à noter que le séparateur spatio-chromatique RC de la figure 4 peut également être réalisé selon les techniques de l'holographie. Un composant holographique, en gélatine bichromatée, peut être enregistré de telle façon que recevant selon une première direction un faisceau R+V+B, par exemple :
- il diffracte selon une deuxième direction un faisceau R correspondant à la primaire rouge ;
- il ne dévie pas la composante verte (transmission du faisceau V selon la première direction) ;
- il diffracte selon une troisième direction, symétrique de la deuxième direction par rapport à la première, un faisceau B correspondant à la primaire bleue.

A la sortie du séparateur RC on a donc un faisceau V de couleur verte dirigé selon la première direction, un faisceau R de couleur rouge selon la deuxième direction et un faisceau B de couleur bleue selon la troisième direction.

Le fait de supprimer ou de moduler en amont du séparateur chromatique certaines bandes spectrales, lève certaines contraintes sur la réalisation du séparateur chromatique notamment lorsqu'il est constitué de miroirs dichroïques ou de filtres colorés. Ceux-ci peuvent alors avoir des flancs de bandes passantes moins raides, ce qui est moins coûteux à réaliser. Ou alors, à transmission égale non nécessairement optimisée, la primaire sera plus saturée si un composant holographique réjecteur est utilisé.

Lorsque la séparation chromatique rouge, vert, bleu est réalisée par un composant séparateur spatio-chromatique, le spectre de la lampe est localement étalé sur une surface correspondant à trois pixels contigus, constituant ainsi trois pixels rouge, vert, bleu. Dans cette configuration également il convient d'éliminer certaines bandes spectrales. Un filtrage chromatique spatial est effectué par la Black Matrix du LCD mais l'utilisation de filtres modulateurs holographiques peut s'avérer utile pour la colorimétrie :
- dans le cas par exemple de pics tel le pic jaune dans le spectre des lampes à halogénures métalliques ;
- pour supprimer les bandes extrêmes du spectre visible (violet par exemple) qui du fait de l'étalement spatial des longueurs d'onde peuvent se situer sur le pixel voisin (rouge dans l'exemple) et en polluer la colorimétrie.

Notons également que l'utilisation d'un filtre holographique "coupe violet" peut permettre dans une architecture classique mono ou tri LCD de relâcher les contraintes sur la largeur spectrale du filtre UV utilisé avec toutes les lampes à halogénures métalliques par exemple, ceci permettant une augmentation notable de sa transmission dans le visible (moins de couches diélectriques nécessaires).

L'invention qui précède a été appliquée à un système comportant un dispositif de séparation spatio-chromatique. Cependant, l'invention est également applicable à un système où la séparation chromatique se fait avec des filtres colorés. Par exemple, on peut prévoir un écran à cristal liquide par primaire et associer un filtre coloré à chaque écran. Les images fournies par les différents écrans sont ensuite combinées pour obtenir une image couleurs.

## Revendications

1. Système de visualisation couleurs comprenant :
- une source lumineuse multichrome (S) ;
- un système de séparation chromatique (RC) adapté à recevoir un faisceau lumineux multichrome (R+V+B) venant de la source (S) et à transmettre plusieurs faisceaux d'éclairement (R, V, B) ayant des gammes de langueurs d'onde différentes et selon des directions différentes ;
- un écran de visualisation électrooptique (LCD) chaque élément image ou dot ayant autant d'éléments d'affichage qu'il y a de faisceaux lumineux d'éclairement ;
- des moyens pour diriger chaque faisceau lumineux d'éclairement sur les éléments d'affichage correspondants ;
- au moins un dispositif de modulation chromatique (FC ; FC1, FC2), ce dispositif étant accordé sur une longueur d'onde particulière, adapté à transmettre au système de séparation chromatique une partie déterminée de l'énergie lumineuse qu'il reçoit à cette longueur d'onde et étant transparent à toutes les autres longueurs d'ondes ;
**caractérisé en ce que** le dispositif de modulation chromatique est situé entre la source et le système de séparation chromatique.

2. Système selon la revendication 1, dans lequel le système de séparation chromatique (RC) comporte des filtres de couleurs.

3. Système selon la revendication 1, dans lequel le système de séparation chromatique est un dispositif holographique enregistré pour recevoir un faisceau contenant différentes teintes primaires (R, V, B) et pour retransmettre les différentes primaires selon des directions différentes.

4. Système selon la revendication 1, dans lequel le dispositif de modulation chromatique (FC ; FC1, FC2) est un dispositif holographique.

5. Système selon la revendication 4, dans lequel le dispositif de modulation chromatique (FC ; FC1, FC2) est mobile autour d'un axe orthogonal à la direction de propagation du faisceau lumineux à moduler.

6. Système selon la revendication 4, dans lequel le dispositif de modulation chromatique (FC ; FC1, FC2) fonctionne sur une gamme de longueur d'onde à rejecter de façon à réjecter une proportion déterminée de la lumière qu'il reçoit à cette gamme de longueur d'ondes.

7. Système selon la revendication 6, dans lequel la gamme de longueurs d'ondes à réjecter est centrée sur le jaune.

## Patentansprüche

1. System zur Wiedergabe von Farben mit:
- einer multichromen Beleuchtungsquelle (S),
- einem System zur chromatischen Trennung (RC) zum Empfang eines multichromen Beleuchtungsstrahls (R+G+B) von der Quelle (S) und zur Aussendung mehrerer Beleuchtungsstrahlen (R, G, B) mit unterschiedlichen Wellenlängenbereichen und in unterschiedliche Richtungen,
- einem elektrooptischen Wiedergabeschirm (LCD), wobei jedes Bildelement so viele Punktwiedergabeelemente hat, wie es Beleuchtungsstrahlen gibt,
- Mitteln zur Richtung jedes Beleuchtungsstrahls auf die entsprechenden Wiedergabeelemente,
- wenigstens einer chromatischen Modulationseinheit (FC; FC1, FC2), wobei diese Einheit auf eine bestimmte Wellenlänge abgestimmt ist, zur Übertragung ein System zur chromatischen Trennung, wobei ein bestimmter Teil der Beleuchtungsenergie, die sie bei dieser Wellenlänge empfängt und für alle anderen Wellenlängen transparent ist,
**dadurch gekennzeichnet, dass** die chromatische Modulationseinheit zwischen der Quelle und dem System zur chromatischen Trennung liegt.

2. System nach Anspruch 1, in dem das System (RC) zur chromatischen Trennung Farbfilter enthält.

3. System nach Anspruch 1, in dem das System zur chromatischen Trennung ein Holographiegerät ist zum Empfang eines Strahls mit verschiedenen Primärfarbtönen (R, G, B) und zur Rückübertragung der verschiedenen Primärfarben in verschiedene Richtungen.

4. System nach Anspruch 1, in dem die Einheit zur chromatischen Modulation (FC; FC1, FC2) eine holographische Einheit ist.

5. System nach Anspruch 4, in dem die Einheit zur chromatischen Modulation (FC; FC1, FC2) um eine Achse bewegbar ist, die senkrecht zu der Ausbreitungsrichtung des zu modulierenden Lichtstrahls liegt.

6. System nach Anspruch 4, in dem die chromatische Modulationseinheit (FC; FC1, FC2) auf einem Wellenlängenbereich arbeitet zur Abweisung eines durch die Lichtquelle bestimmten Teils, den sie bei diesem Wellenlängenbereich empfängt.

7. System nach Anspruch 6, in dem der zu unterdrückende Wellenlängenbereich auf Gelb zentriert ist.

## Claims

1. Colour display system, comprising:
- a polychrome light source (S);
- a chromatic separation system (RC) receiving a polychrome light beam (R+V+B) coming from the source (S) and transmitting several illuminating light beams (R,V,B) having different wavelength ranges and in different directions;
- an electrooptic display screen (LCD), each image element or dot having as many display elements as there are illuminating light beams;
- means for directing each illuminating light beam on the corresponding display elements ;
- at least one chromatic modulation device (FC ; FC1, FC2) this device being tuned to a particular wavelength, able to transmit a defined part of the light energy which it receives at this wavelength to the chromatic separation system and being transparent at the other wavelengths, **characterized in that** the chromatic modulation device lies between the source and the chromatic separation system.

2. System according to Claim 1, wherein the chromatic separation system (RC) includes colour filters.

3. System according to Claim 1, wherein the spatio-chromatic separation system is a holographic device recorded to receive a beam containing various color primaries (R, G, B) and to retransmit the various primaries in different directions.

4. System according to Claim 1, wherein the chromatic modulation device (FC ; FC1, FC2) is a holographic device.

5. System according to Claim 4, wherein the chromatic modulation device (FC ; FC1, FC2) is movable about an axis orthogonal to the direction of propagation of the light beam to be modulated.

6. System according to Claim 4, wherein the chromatic modulation device (FC ; FC1, FC2) operates over a wavelength range to be rejected so as to reject a defined proportion of the light which it receives in this wavelength range.

7. System according to Claim 6, wherein the wavelength range to be rejected is centred on yellow.
